# EUROPEAN PATENT APPLICATION

(11) **EP 4 844 918 A1**
(43) Date of publication of application: **25.11.2026**
(21) Application number: 25741769.1
(22) Date of filing: 09.01.2025
(51) Int. Cl.: H01M 50/242, H01M 50/35, H01M 50/204, H01M 50/244, H01M 50/289, H01M 50/367

(54) **BATTERY PACK**

(30) Priority: 17.01.2024 JP 2024005412
(71) Applicant: AESC Japan Ltd., Yokohama-shi, Kanagawa 220-0012 (JP)
(72) Inventor: YOSHIOKA, Shinichi, Yokohama-shi, Kanagawa 220-0012 (JP); NAKAI, Masayuki, Yokohama-shi, Kanagawa 220-0012 (JP)
(74) Representative: Becker, Eberhard
(86) International application number: PCT/JP2025/000485
(87) International publication number: WO 2025/154637

(57) **Abstract**

A battery pack (10) comprises: a battery module (100); a pack housing (300) that accommodates the battery module (100); and a support body (342) that at least partially partitions the battery module (100) from the pack housing (300).

## Description

### Technical Field

The present invention relates to a battery pack.

### Related Art

In recent years, various battery packs have been developed. A battery pack includes a battery module and a housing accommodating the battery module.

Patent Document 1 describes a battery pack. The battery pack includes a battery assembly and a battery pack frame. The battery pack frame has a side frame and a bottom guard. The side frame and the bottom guard form an accommodating region for accommodating the battery assembly.

Patent Document 2 describes a battery pack. The battery pack includes a battery module and an impact-resistant exhaust assembly. The impact-resistant exhaust assembly has a honeycomb buffer structure. The honeycomb buffer structure absorbs impacts on the battery pack.

### Related Art Document

### Patent Document

Patent Document 1: Chinese Utility Model No. 219203327 specification
Patent Document 2: Chinese Utility Model No. 219067061 specification

### SUMMARY OF INVENTION

### Problem to Be Solved by Invention

An external force may sometimes be applied to a battery pack. Therefore, it is necessary to protect a battery module from the external force applied to the battery pack.

An example of an objective of the present invention is to protect a battery module from an external force applied to a battery pack. Other objectives of the present invention will become apparent from the description of the present specification.

### Means for Solving Problem

An aspect of the present invention is as follows.
1. A battery pack includes:
   a battery module;
   a housing configured to accommodate the battery module; and
   a partition configured to at least partially partition the battery module and the housing.
2. In the battery pack according to 1., a space is present between the housing and the partition.
3. In the battery pack according to 2., a space on a side where the battery module is located and the space present between the housing and the partition communicate with each other.
4. In the battery pack according to any one of 1. to 3., the battery module and the partition are attached to each other.

### Effect of Invention

According to the above aspect of the present invention, the battery module can be protected from an external force applied to the battery pack.

### BRIEF DESCRIPTION OF THE DRAWINGS

[FIG. 1] is a schematic plan view of a battery pack according to an embodiment.
[FIG. 2] is a cross-sectional view taken along line A-A of FIG. 1.
[FIG. 3] is a diagram showing a modification example of FIG. 2.

### DESCRIPTION OF THE EMBODIMENTS

Hereinafter, embodiments and modification examples of the present invention will be described with reference to the drawings. In all drawings, similar components will be labeled with similar reference signs, and descriptions thereof will be omitted as appropriate.

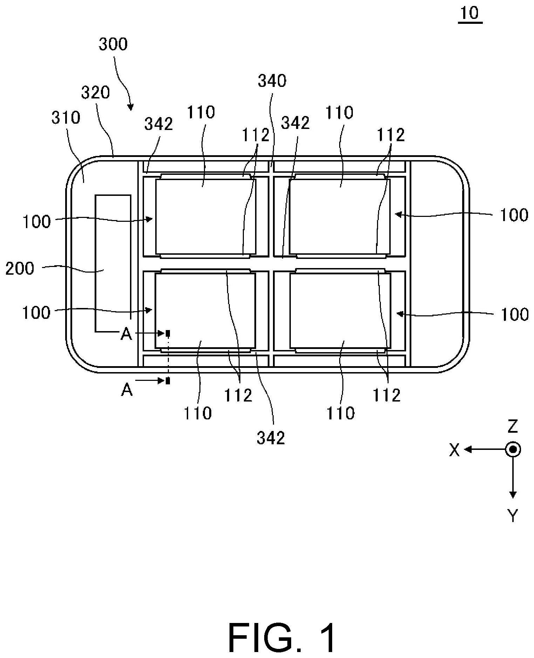

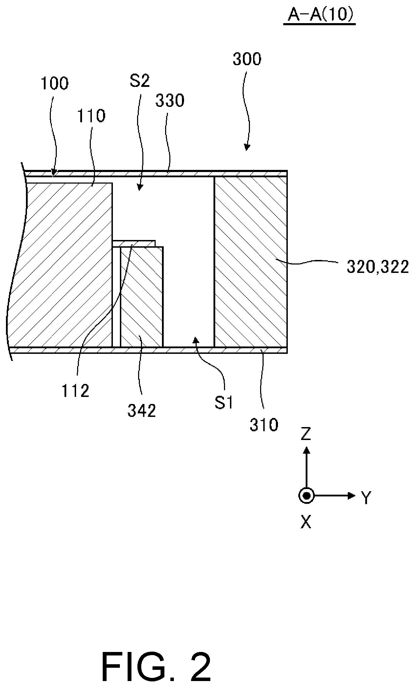

FIG. 1 is a schematic plan view of a battery pack 10 according to an embodiment. FIG. 2 is a cross-sectional view taken along line A-A of FIG. 1. For the purpose of description, an upper plate 330 shown in FIG. 2 is removed in FIG. 1.

In the embodiment, the battery pack 10 is mounted in an automobile. Specifically, the battery pack 10 is mounted between the front wheels and the rear wheels of the automobile. Hereinafter, unless otherwise specified, the battery pack 10 will be described as being mounted in an automobile. However, the battery pack 10 is also applicable to uses other than automobiles.

In each drawing, an X direction, a Y direction, and a Z direction are indicated for the purpose of description. The X direction indicates the front-rear direction of the battery pack 10. The Y direction is orthogonal to the X direction. The Y direction indicates the left-right direction of the battery pack 10. The Z direction is orthogonal to both the X direction and the Y direction. The Z direction indicates the up-down direction of the battery pack 10. The arrow indicating the X direction, the arrow indicating the Y direction, and the arrow indicating the Z direction indicate the forward direction, the leftward direction, and the upward direction of the battery pack 10, respectively. In FIG. 1, the circled black dot indicating the Z direction shows that the arrow indicating the Z direction extends from the back of the paper surface toward the close side. In FIG. 2, the circled black dot indicating the X direction shows that the arrow indicating the X direction extends from the back of the paper surface toward the close side. However, the relationship between the X direction, the Y direction, and the Z direction and the front-rear direction, the left-right direction, and the up-down direction of the battery pack 10 is not limited to this example.

In the embodiment, the front-rear direction, the left-right direction, and the up-down direction of the battery pack 10 are determined by the automobile in which the battery pack 10 is mounted. The X direction, the Y direction, and the Z direction indicate the front-rear direction, the left-right direction, and the up-down direction of the automobile, respectively. The arrow indicating the X direction, the arrow indicating the Y direction, and the arrow indicating the Z direction indicate the forward direction, the leftward direction, and the upward direction of the automobile, respectively. However, the relationship between the front-rear direction, the left-right direction, and the up-down direction of the battery pack 10 and the front-rear direction, the left-right direction, and the up-down direction of the automobile is not limited to this example.

Hereinafter, as necessary, the side indicated by the arrow indicating the X direction will be referred to as the +X side, and the side opposite to the side indicated by the arrow indicating the X direction will be referred to as the -X side. Hereinafter, as necessary, the side indicated by the arrow indicating the Y direction will be referred to as the +Y side, and the side opposite to the side indicated by the arrow indicating the Y direction will be referred to as the -Y side. Hereinafter, as necessary, the side indicated by the arrow indicating the Z direction will be referred to as the +Z side, and the side opposite to the side indicated by the arrow indicating the Z direction will be referred to as the -Z side.

The battery pack 10 according to the embodiment will be described with reference to FIG. 1 and FIG. 2.

As shown in FIG. 1, the battery pack 10 includes multiple battery modules 100, a junction box 200, and a pack housing 300.

In the example shown in FIG. 1, four battery modules 100 are arranged in two rows and two columns in the X direction and the Y direction, respectively. The number and arrangement of the battery modules 100 are not limited to the number and arrangement shown in FIG. 1. For example, the number of battery modules 100 mounted in the battery pack 10 may be only one. Alternatively, the battery pack 10 may include, for example, five or more battery modules 100.

Each battery module 100 includes multiple battery cells (not shown) stacked in a direction perpendicular to the Z direction. The multiple battery cells are electrically connected to each other in series, in parallel, or by a combination of series and parallel arrangements. As shown in FIG. 1, each battery module 100 further includes a module housing 110 configured to accommodate the battery cells (not shown). Each module housing 110 has a substantially rectangular parallelepiped shape. As shown in FIG. 1, as viewed in the Z direction, each module housing 110 has a substantially quadrilateral shape having a pair of sides substantially parallel to the X direction and a pair of other sides substantially parallel to the Y direction. As shown in FIG. 1, protrusions 112 are provided on both sides of each module housing 110 in the Y direction. As viewed in the Z direction, each protrusion 112 extends in the X direction. However, the shape of the protrusion 112 is not limited to the shape shown in FIG. 1.

As shown in FIG. 1, the junction box 200 is located on the +X side with respect to the two battery modules 100 located on the +X side. The position at which the junction box 200 is disposed is not limited to the position shown in FIG. 1. The multiple battery modules 100 and the junction box 200 are electrically connected to each other by bus bars (not shown).

As shown in FIG. 1 and FIG. 2, the pack housing 300 includes a lower plate 310, a side frame 320, an upper plate 330, and a support frame 340. The pack housing 300 accommodates the multiple battery modules 100 and the junction box 200.

The lower plate 310 has a substantially plate shape substantially perpendicular to the Z direction. The multiple battery modules 100 and the junction box 200 are located on the +Z side with respect to the +Z side surface of the lower plate 310. As shown in FIG. 1, the lower plate 310 has a substantially rectangular shape having a pair of long sides substantially parallel to the X direction and a pair of short sides substantially parallel to the Y direction. The shape of the lower plate 310 is not limited to the example shown in FIG. 1.

The side frame 320 extends toward the +Z side from the entire perimeter around the Z direction of the +Z side surface of the lower plate 310. As viewed in the Z direction, the side frame 320 surrounds the region in which the multiple battery modules 100 and the junction box 200 are located.

The upper plate 330 is located on the +Z side with respect to the multiple battery modules 100, the junction box 200, and the side frame 320. As viewed in the Z direction, the lower plate 310 and the upper plate 330 have substantially the same shape. The side frame 320 and a portion of the upper plate 330 that overlaps the side frame 320 in the Z direction are fastened to each other by fasteners such as bolts (not shown). In a state in which the side frame 320 and the portion of the upper plate 330 that overlaps the side frame 320 in the Z direction are fastened to each other, the lower plate 310, the side frame 320, and the upper plate 330 form an accommodating space for accommodating the multiple battery modules 100 and the junction box 200.

As shown in FIG. 1, as viewed in the Z direction, the support frame 340 extends in a frame shape that at least partially surrounds each battery module 100. As shown in FIG. 1, as viewed in the Z direction, the support frame 340 includes a support 342 located on the +Y side with respect to the battery modules 100 located on the +Y side, a support 342 located between the battery modules 100 located on the +Y side and the battery modules 100 located on the -Y side, and a support 342 located on the -Y side with respect to the battery modules 100 located on the - Y side. As viewed in the Z direction, each support 342 extends in the X direction. As shown in FIG. 2, each protrusion 112 is located on the +Z side with respect to the +Z side surface of each support 342. Each protrusion 112 and each support 342 are fastened to each other by fasteners such as bolts (not shown). With each protrusion 112 and each support 342 fastened to each other, each battery module 100 and the pack housing 300 are attached to each other.

The battery pack 10 according to the embodiment will be further described with reference to FIG. 2. Hereinafter, as necessary, the portion of the side frame 320 located in the cross-section shown in FIG. 2 will be referred to as a side wall 322. The battery module 100 described with reference to FIG. 2 hereinafter refers to the battery module 100 located on the +X side and the +Y side in FIG. 1. The matters described with reference to FIG. 2 are equally applicable to the battery modules 100 other than the battery module 100 located on the +X side and the +Y side in FIG. 1. The support 342 described with reference to FIG. 2 hereinafter refers to the support 342 located on the +Y side with respect to the battery modules 100 located on the +Y side in FIG. 1. The matters described with reference to FIG. 2 are equally applicable to the support 342 located on the -Y side with respect to the battery modules 100 located on the -Y side in FIG. 1.

As shown in FIG. 2, a space is present between the +Y side portion of the module housing 110 and the -Y side portion of the side wall 322. The support 342 is located in the space present between the +Y side portion of the module housing 110 and the -Y side portion of the side wall 322. In the example shown in FIG. 2, the support 342 serves as a partition configured to at least partially partition the +Y side portion of the module housing 110 and the -Y side portion of the side wall 322. Accordingly, in the example shown in FIG. 2, even in the case where an external force is applied to the battery pack 10 from the +Y side with respect to the side wall 322, the battery module 100 can be protected by the support 342. Furthermore, compared to a case where a cushioning material is provided between the +Y side portion of the module housing 110 and the side wall 322 in place of the support 342, the battery module 100 can be protected from the external force more easily. To protect the battery module 100 from an external force, the rigidity of the support 342 is preferably relatively high. The support 342 is made of, for example, a metal such as aluminum.

In the example shown in FIG. 2, a first space S1 is present between the inner surface on the -Y side of the side wall 322 and the side surface on the +Y side of the support 342. Accordingly, even in the case where an external force is applied to the battery pack 10 from the +Y side with respect to the side wall 322, and the side wall 322 moves toward the -Y side due to deformation of the side wall 322, the external force can be prevented from being transmitted to the battery module 100 via the support 342 until the inner surface on the -Y side of the side wall 322 and the side surface on the +Y side of the support 342 come into contact with each other. Furthermore, even in the case where an external force is applied to the battery pack 10 from the +Y side with respect to the side wall 322, and the inner surface on the -Y side of the side wall 322 and the side surface on the +Y side of the support 342 come into contact with each other, the first space S1 can function as a buffer region for mitigating the external force. Accordingly, compared to a case where the inner surface on the -Y side of the side wall 322 and the side surface on the +Y side of the support 342 are in contact with each other in advance with the first space S1 being not present, the battery module 100 can be more easily protected from the external force applied to the battery pack 10. However, with the first space S1 being not present, the inner surface on the -Y side of the side wall 322 and the side surface on the +Y side of the support 342 may be in contact with each other in advance.

In the example shown in FIG. 2, the height of the support 342 in the Z direction is less than the height of the module housing 110 in the Z direction. Accordingly, as shown in FIG. 2, a second space S2 is present between the +Z side surface of the support 342 and the -Z side surface of the upper plate 330. Therefore, the space on the side where the battery module 100 is located and the first space S1 communicate with each other via the second space S2. Accordingly, in a state in which no external force is applied to the battery pack 10 from the +Y side with respect to the side wall 322, the first space S1 can also function as a flow path for flowing a relatively high-temperature gas generated from the battery module 100. Such a gas is likely to be generated, for example, due to an abnormality occurring in the battery cells of the battery module 100.

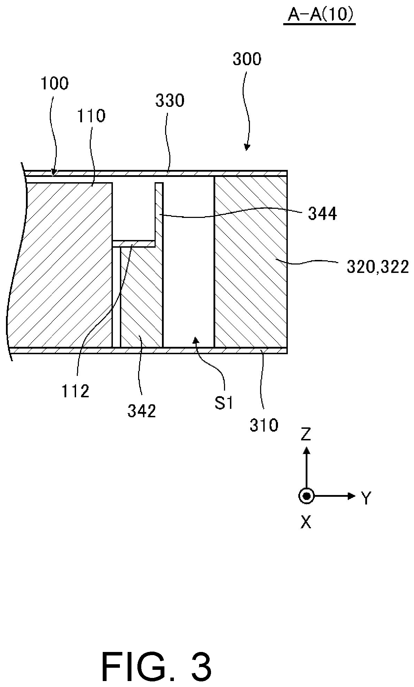

FIG. 3 is a diagram showing a modification example of FIG. 2.

In the example shown in FIG. 3 as well, the protrusion 112 and the support 342 are fastened to each other. As shown in FIG. 3, a protrusion wall 344 is provided on the +Z side surface of the support 342. In the example shown in FIG. 3, the support 342 is located on the +Y side with respect to the protrusion 112. However, the position at which the support 342 is provided is not limited to the example shown in FIG. 3. The support 342 and the protrusion wall 344 serve as a partition configured to at least partially partition the +Y side portion of the module housing 110 and the -Y side portion of the side wall 322. Accordingly, in the same manner as in the embodiment, even in the case where an external force is applied to the battery pack 10 from the +Y side with respect to the side wall 322, the battery module 100 can be protected by the support 342 and the protrusion wall 344.

The space on the side where the battery module 100 is located and the first space S1 may communicate with each other via a through-hole extending through at least one of the support 342 and the protrusion wall 344 in the Y direction. By providing such a through-hole, the relatively high-temperature gas generated from the battery module 100 can be more easily directed and flowed toward the first space S1. In the same manner as in the embodiment, the first space S1 can function as a buffer region for mitigating an external force, and can also function as a flow path for flowing the relatively high-temperature gas generated from the battery module 100.

The embodiment and the modification example of the present invention have been described above with reference to the drawings; however, these are merely illustrative of the present invention, and various configurations other than those described above may also be adopted.

This application claims priority based on Japanese Patent Application No. 2024-005412 filed on January 17, 2024, the entire disclosure of which is incorporated herein by reference.

### Reference Signs List

10 battery pack, 100 battery module, 110 module housing, 112 protrusion, 200 junction box, 300 pack housing, 310 lower plate, 320 side frame, 322 side wall, 330 upper plate, 340 support frame, 342 support, 344 protrusion wall, S1 first space, S2 second space

## Claims

1. A battery pack comprising:
a battery module;
a housing configured to accommodate the battery module; and
a partition configured to at least partially partition the battery module and the housing.

2. The battery pack according to claim 1, wherein
a space is present between the housing and the partition.

3. The battery pack according to claim 2, wherein
a space on a side where the battery module is located and the space present between the housing and the partition communicate with each other.

4. The battery pack according to any one of claims 1 to 3, wherein
the battery module and the partition are attached to each other.
